(19) Europäisches Patentamt
European Patent Office
Office européen des brevets

(11) **EP 4 470 700 A1**

(12) **EUROPEAN PATENT APPLICATION**
published in accordance with Art. 153(4) EPC

(43) Date of publication:
**04.12.2024 Bulletin 2024/49**

(21) Application number: **22923851.4**

(22) Date of filing: **28.01.2022**

(51) International Patent Classification (IPC):
**B23H 7/02** $^{(2006.01)}$

(52) Cooperative Patent Classification (CPC):
**B23H 7/02**

(86) International application number:
**PCT/JP2022/003269**

(87) International publication number:
**WO 2023/144987 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **MASHIKO Koutarou**
**Minamitsuru-gun, Yamanashi 401-0597 (JP)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **WIRE ELECTRICAL DISCHARGE MACHINE, THRESHOLD VALUE DETERMINATION DEVICE, AND THRESHOLD VALUE DETERMINATION METHOD**

(57)     Provided is a wire electrical discharge machine (10) which, when a voltage (V) between a wire electrode (18) and a workpiece (W) is lower than a threshold value (VTH), determines that the wire electrode (18) and the workpiece (W) have come into contact with each other. The wire electrical discharge machine (10) comprises: an acquisition unit (34) that acquires a set value (44) for a factor that fluctuates the voltage (V) between the wire electrode (18) and the workpiece (W); and a threshold value determination unit (36) that calculates the threshold value (VTH), on the basis of a reference value (32) of the factor and the acquired set value (44).

FIG. 3

**Description**

TECHNICAL FIELD

The present invention relates to a wire electrical discharge machine, a threshold value determination device, and a threshold value determination method.

BACKGROUND ART

The wire electrical discharge machine applies a voltage between a wire electrode and a workpiece. This voltage drops when the wire electrode and the workpiece touch each other. A method of determining whether or not the wire electrode and the workpiece have come into contact with each other by utilizing this change in voltage has been proposed (see also JP 2013-226612 A).

SUMMARY OF THE INVENTION

The voltage between the wire electrode and the workpiece is compared with a predetermined reference voltage (threshold value). When the voltage is lower than the threshold value, it is determined that the wire electrode and the workpiece have come into contact with each other.

However, the voltage may exceed the threshold value even though the wire electrode and the workpiece have come into contact with each other. In this case, there is a problem that it is not accurately determined that the wire electrode and the workpiece have come into contact with each other.

The present invention has the object of solving the aforementioned problem.

A first aspect of the present invention is characterized by a wire electrical discharge machine configured to determine that a wire electrode and a workpiece have come into contact with each other when a voltage between the wire electrode and the workpiece has become lower than a threshold value, the wire electrical discharge machine including: an acquisition unit configured to acquire a set value related to a factor that causes the voltage between the wire electrode and the workpiece to vary; and a threshold value determination unit configured to calculate a threshold value based on a reference value corresponding to the factor and the acquired set value.

A second aspect of the present invention is characterized by a threshold value determination device for determining a threshold value to be compared with a voltage between a wire electrode of a wire electrical discharge machine and a workpiece in order to determine whether or not the wire electrode and the workpiece have come into contact with each other, the threshold value determination device including: an acquisition unit configured to acquire a set value related to a factor that causes the voltage between the wire electrode and the workpiece to vary; and a threshold value determination unit configured to calculate a threshold value based on a reference value of the factor and the acquired set value.

A third aspect of the present invention is characterized by a threshold value determination method for determining a threshold value to be compared with a voltage between a wire electrode of a wire electrical discharge machine and a workpiece in order to determine whether or not the wire electrode and the workpiece have come into contact with each other, the threshold value determination method including: an acquisition step of acquiring a set value related to a factor that causes the voltage between the wire electrode and the workpiece to vary; and a threshold value determination step of calculating a threshold value based on a reference value of the factor and the acquired set value.

According to the present invention, the threshold value is calculated in accordance with the factor that causes the voltage between the wire electrode and the workpiece to vary, and therefore it is possible to more accurately determine the contact between the wire electrode and the workpiece based on the comparison between the threshold value and the voltage.

BRIEF DESCRIPTION OF DRAWINGS

FIG. 1 is a configuration diagram of a wire electrical discharge machine according to an embodiment;
FIG. 2A is a graph showing a first example of change in voltage before and after short-circuiting between a wire electrode and a workpiece; FIG. 2B is a graph showing a second example of change in voltage before and after short-circuiting between the wire electrode and the workpiece;
FIG. 3 is a block diagram of a threshold value determination device; and
FIG. 4 is a flowchart illustrating a process flow of a threshold value determination method according to the embodiment.

DETAILED DESCRIPTION OF THE INVENTION

[Embodiments]

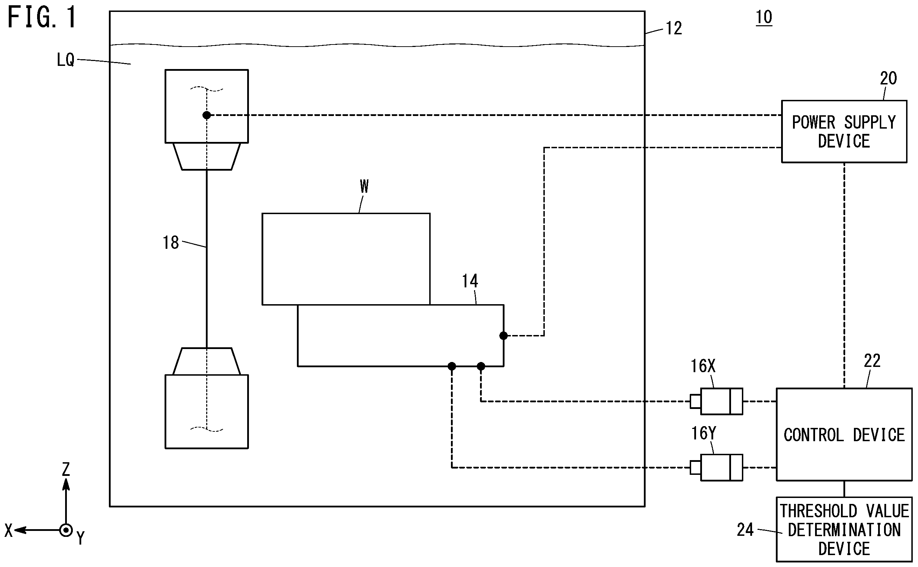

FIG. 1 is a configuration diagram of a wire electrical discharge machine 10 according to an embodiment.

The wire electrical discharge machine 10 includes a work pan 12, a table 14, a motor 16X, a motor 16Y, a wire electrode 18, a power supply device 20, a control device 22, and a threshold value determination device 24. The control device 22, for example, is a computerized numerical controller.

The work pan 12 is a tank that houses the table 14. The work pan 12 stores a dielectric working fluid (working fluid) LQ.

The table 14 is a pedestal for supporting a workpiece W. The table 14 and the workpiece W are immersed in the working fluid LQ inside the work pan 12.

Each of the motor 16X and the motor 16Y is a motor connected to the table 14. The table 14 moves in the X direction in response to the driving of the motor 16X. The table 14 moves in the Y direction in response to the driving of the motor 16Y. The motor 16X and the motor 16Y are controlled by the control device 22.

The wire electrode 18 is a conductive wire material. The wire electrode 18 is stretched within the work pan 12. The wire electrode 18 moves relative to the table 14 in the horizontal direction as the table 14 moves in the horizontal direction.

The power supply device 20 is connected to the wire electrode 18 and the table 14 (workpiece W). The power supply device 20 applies a voltage for detecting contact between the wire electrode 18 and the workpiece W, between the wire electrode 18 and the workpiece W. This voltage is a pulsed voltage. In the following description, the voltage V refers to a voltage detected between the wire electrode 18 and the workpiece W, unless otherwise specified.

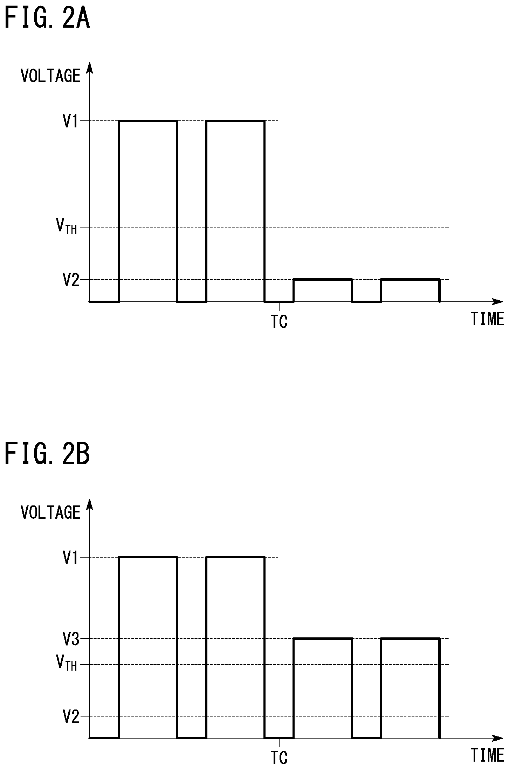

FIG. 2A is a graph showing a first example of change in the voltage V before and after short-circuiting between the wire electrode 18 and the workpiece W. This graph has a vertical axis indicating the magnitude of the voltage V and a horizontal axis which is a time axis.

In a period of time before the time point TC in FIG. 2A, the wire electrode 18 and the workpiece W are not in contact with each other. The magnitude of the voltage V in this period of time is V1 (voltage V1).

At the time point TC in FIG. 2A, the wire electrode 18 and the workpiece W are sufficiently close to (in contact with) each other. The wire electrode 18 and the workpiece W electrically short-circuit by coming into contact with each other. As a result, even if the waveform of the voltage outputted from the power supply device 20 does not change before and after the time point TC, the voltage V (V2) in the period of time after the time point TC becomes smaller than the voltage V1 (V1 > V2).

The control device 22 controls the motor 16X, the motor 16Y, and the power supply device 20 according to a predetermined program. The control device 22 determines whether or not the wire electrode 18 and the workpiece W have short-circuited, based on whether or not the voltage V has become lower than a predetermined threshold value $V_{TH}$. That is, the control device 22 determines whether the wire electrode 18 and the workpiece W have come into contact with each other, based on whether the voltage V has become lower than the threshold value $V_{TH}$.

However, the magnitude of the voltage V during the short-circuiting between the wire electrode 18 and the workpiece W changes due to a plurality of factors. The plurality of factors include the wire electrode 18, the workpiece W, and the working fluid LQ.

For example, the voltage V during the short-circuiting between the wire electrode 18 and the workpiece W is larger, as the electrical resistivity (specific resistance or resistivity) of each of the wire electrode 18, the workpiece W, and the working fluid LQ is higher. The voltage V during the short-circuiting between the wire electrode 18 and the workpiece W is larger, as the wire electrode 18 is thinner or as the thickness of the workpiece W is smaller.

FIG. 2B is a graph showing a second example of change in the voltage V before and after short-circuiting between the wire electrode 18 and the workpiece W. In FIG. 2B, the magnitude of the voltage V during the short-circuiting between the wire electrode 18 and the workpiece W is larger than that in FIG. 2A because of the above-described factors. The form of the graph of FIG. 2B is the same as that of the graph of FIG. 2A.

As shown in FIG. 2B, the voltage V during the short-circuiting between the wire electrode 18 and the workpiece W may indicate a voltage V3 larger than the threshold value $V_{TH}$ (V3 > $V_{TH}$), due to the above-described factors. In this case, it is not possible to determine that the wire electrode 18 and the workpiece W have come into contact with each other, based on the comparison between the voltage V and the threshold value $V_{TH}$.

Here, a method of using a data table in which a plurality of threshold values $V_{TH}$ corresponding to combinations of the plurality of factors are stored may be considered as a countermeasure. However, the above method cannot be used in a case that the threshold value $V_{TH}$ corresponding to the combination of the wire diameter of the wire electrode 18 used by an operator, the thickness of the workpiece W machined by the operator, etc. is not stored in the data table in advance.

The voltage V may vary if at least one of the plurality of factors is different. Therefore, the data table is required to cover a huge number of the threshold values $V_{TH}$ corresponding to all combinations of the plurality of factors. However, it is impractical to store in advance a vast number of the threshold values $V_{TH}$ corresponding to all combinations of the plurality of factors in the data table.

In light of the above, the threshold value determination device 24 according to the present embodiment will be described below. The threshold value determination device 24 is an electronic device (computer) communicably connected to the control device 22. The threshold value determination device 24 may be incorporated in the control device 22 as a part of the control device 22.

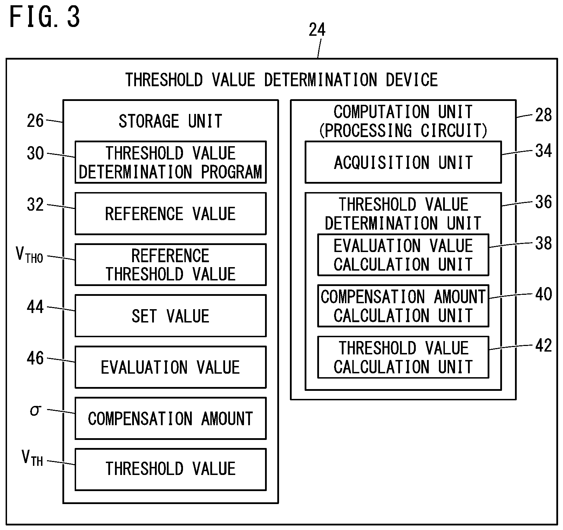

FIG. 3 is a block diagram of the threshold value determination device 24.

The threshold value determination device 24 is equipped with a storage unit 26 and a computation unit 28.

The storage unit 26 includes one or more memories. The storage unit 26 includes, for example, a random access memory (RAM), a read only memory (ROM), and the like.

The storage unit 26 stores a threshold value determination program 30, a plurality of reference values 32 ($\alpha_0$, $\beta_0$, Yo), and a reference threshold value $V_{TH0}$. In order to avoid complication of the drawing, only one reference value 32 is shown in FIG. 3.

The threshold value determination program 30 is a program for setting the threshold value $V_{TH}$ according to the plurality of factors.

The plurality of reference values 32 are numerical values determined in advance for the plurality of factors, respectively. The plurality of reference values 32 include the reference value $\alpha_0$ of the wire electrode 18, the reference value $\beta_0$ of the workpiece W, and the reference value $\gamma_0$ of the dielectric working fluid (working fluid) LQ.

Concerning the reference value $\alpha_0$ of the wire electrode 18, one value is determined in advance based on the wire diameter of a predetermined wire electrode, the predetermined resistivity of the predetermined wire electrode, etc.

Concerning the reference value $\beta_0$ of the workpiece W, one value is determined in advance based on the thickness of a predetermined workpiece, the resistivity of the predetermined workpiece, etc.

Concerning the reference value $\gamma_0$ of the working fluid LQ, one value is determined in advance based on the resistivity of a predetermined working fluid.

The predetermined wire electrode may be different from the wire electrode 18 actually mounted in the wire electrical discharge machine 10. The predetermined workpiece may be different from the workpiece W actually placed in the work pan 12. The predetermined working fluid may be different from the working fluid LQ actually stored in the work pan 12. Therefore, each of the plurality of reference values 32 may be a constant specified in advance by the manufacturer of the wire electrical discharge machine 10, for example.

The reference threshold value $V_{TH0}$ is a voltage value (a constant) determined according to a combination of the reference values 32 of the plurality of factors. The number of reference threshold values $V_{TH0}$ stored in the storage unit 26 is one.

The storage unit 26 may store various kinds of data, programs, and the like, in addition to the threshold value determination program 30, the plurality of reference values 32, and the reference threshold value $V_{TH0}$.

The computation unit 28 includes a processing circuit. The processing circuit includes one or more processors. However, the processing circuit of the computation unit 28 may include an application specific integrated circuit (ASIC), a field-programmable gate array (FPGA), a discrete device, or the like.

The computation unit 28 includes an acquisition unit 34 and a threshold value determination unit 36. The threshold value determination unit 36 includes an evaluation value calculation unit 38, a compensation amount calculation unit 40, and a threshold value calculation unit 42. The acquisition unit 34 and the threshold value determination unit 36 are implemented by the processor of the computation unit 28 executing the threshold value determination program 30. However, at least a part of the acquisition unit 34 and the threshold value determination unit 36 may be realized by the above-described ASIC, FPGA, discrete device, or the like.

The acquisition unit 34 acquires a plurality of set values 44. The plurality of set values 44 are numerical values related to the plurality of factors, the values being set in the wire electrical discharge machine 10. The plurality of set values 44 include the set values 44 for the wire diameter of the wire electrode 18 provided in the wire electrical discharge machine 10 and for the resistivity of the wire electrode 18. The plurality of set values 44 also include the set values 44 for the thickness of the workpiece W accommodated in the work pan 12, for the resistivity of the workpiece W, and for the resistivity of the working fluid LQ stored in the work pan 12.

The acquisition unit 34 acquires the plurality of set values 44 from data set in the control device 22 as machining conditions for electrical discharge machining, for example. However, the operator may input at least one of the plurality of set values 44 to the threshold value determination device 24 via an input device such as an operation panel or a touch panel. In this case, the acquisition unit 34 acquires, as the set value 44, a numerical value input to the threshold value determination device 24 by the operator.

The storage unit 26 may store the acquired plurality of set values 44. In order to avoid complexity of the drawing, only one set value 44 is shown in FIG. 3.

The evaluation value calculation unit 38 calculates a plurality of evaluation values 46 ($\alpha$, $\beta$, $\gamma$) based on the plurality of set values 44 that have been acquired. The plurality of evaluation values 46 include an evaluation value $\alpha$ of the wire electrode 18, an evaluation value $\beta$ of the workpiece W, and an evaluation value $\gamma$ of the working fluid LQ.

The evaluation value $\alpha$ of the wire electrode 18 is calculated based on at least one of the wire diameter of the wire electrode 18 actually provided in the wire electrical discharge machine 10 or the resistivity of that wire electrode 18.

For example, the evaluation value calculation unit 38 sets the evaluation value $\alpha$ to be smaller as the wire diameter of the wire electrode 18 is smaller, and sets the evaluation value $\alpha$ to be larger as the wire diameter of the wire electrode 18 is larger.

Further, for example, the evaluation value calculation unit 38 sets the evaluation value $\alpha$ to be larger as the resistivity of the wire electrode 18 is lower, and sets the evaluation value $\alpha$ to be smaller as the resistivity of the wire electrode 18 is higher.

However, when the wire electrode 18 has the same wire diameter, resistivity, etc. as those of the predetermined wire electrode used to determine the reference value $\alpha_0$, the evaluation value $\alpha$ is the same value as the reference value $\alpha_0$.

The evaluation value $\beta$ of the workpiece W is calculated based on at least one of the thickness of the workpiece W actually accommodated in the work pan 12 or the resistivity of that workpiece W.

For example, the evaluation value calculation unit 38 sets the evaluation value $\beta$ to be smaller as the thickness of the workpiece W is smaller, and sets the evaluation value $\beta$ to be larger as the thickness of the workpiece W is larger.

Further, for example, the evaluation value calculation unit 38 sets the evaluation value $\beta$ to be larger as the resistivity of the workpiece W is lower, and sets the evaluation value $\beta$ to be smaller as the resistivity of the workpiece W is higher.

However, when the workpiece W has the same thickness, resistivity, etc. as those of the predetermined workpiece used for determining the reference value $\beta_0$, the evaluation value $\beta$ is the same value as the reference value $\beta_0$.

The evaluation value $\gamma$ of the working fluid LQ is calculated based on the resistivity of the working fluid LQ actually stored in the work pan 12.

The evaluation value calculation unit 38 sets the evaluation value $\gamma$ to be larger as the resistivity of the working fluid LQ is lower, and sets the evaluation value $\gamma$ to be smaller as the resistivity of the working fluid LQ is higher.

However, when the working fluid LQ has the same resistivity etc. as the predetermined working fluid used to determine the reference value $\gamma_0$, the evaluation value $\gamma$ is the same value as the reference value $\gamma_0$.

The storage unit 26 may store the plurality of evaluation values 46 that have been calculated. In order to avoid complexity of the drawing, only one evaluation value 46 is shown in FIG. 3.

The compensation mount calculation unit 40 of the threshold value determination unit 36 calculates a compensation amount $\sigma$ based on the difference between the plurality of reference values 32 and the plurality of evaluation values 46. The compensation amount calculation unit 40 calculates the compensation amount $\sigma$ based on Equation (1). In the Equation (1), $\sigma$ represents the compensation amount $\sigma$. $\alpha_0$ indicates the reference value $\alpha_0$ of the wire electrode 18. $\alpha$ represents the evaluation value $\alpha$ of the wire electrode 18. $\beta_0$ represents the reference value $\beta_0$ of the workpiece W. $\beta$ represents the evaluation value $\beta$ of the workpiece W. $\gamma_0$ represents the reference value $\gamma_0$ of the working fluid LQ. $\gamma$ represents the evaluation value $\gamma$ of the working fluid LQ. Each of A, B, and C is a weighting coefficient of 0 or more (A, B, C $\geq$ 0). Each of A, B, and C is determined based on, for example, an experiment while considering the magnitude of influence of each of the wire electrode 18, the workpiece W, and the working fluid LQ on the variation of the voltage V.

$$\sigma = \left(1 + \frac{\alpha_0 - \alpha}{\alpha_0} A\right) \times \left(1 + \frac{\beta_0 - \beta}{\beta_0} B\right) \times \left(1 + \frac{\gamma_0 - \gamma}{\gamma_0} C\right) \cdots (1)$$

According to Equation (1), the compensation amount $\sigma$ changes according to the difference between each reference value 32 and the evaluation value 46 corresponding to each reference value 32.

The storage unit 26 may store the calculated compensation amount $\sigma$.

The threshold value calculation unit 42 compensates the reference threshold value $V_{TH0}$ based on the compensation amount $\sigma$, to thereby calculate the threshold value $V_{TH}$. The threshold value calculation unit 42 calculates the threshold value $V_{TH}$ based on the following Equation (2). In the Equation (2), $V_{TH}$ represents the threshold value $V_{TH}$. $V_{TH0}$ indicates the reference threshold value $V_{TH0}$. $\sigma$ represents the compensation amount $\sigma$ calculated according to the Equation (1).

$$V_{TH} = V_{TH0} \times \sigma \cdots (2)$$

According to the threshold value determination device 24, the reference threshold value $V_{TH0}$ is compensated as in the following (1) to (5).

(1) The voltage V during the short-circuiting between the wire electrode 18 and the workpiece W becomes larger as the wire diameter becomes smaller. In view of this, the reference threshold value $V_{TH0}$ is compensated to a larger threshold value $V_{TH}$ as the wire diameter is smaller.

(2) The voltage V during the short-circuiting between the wire electrode 18 and the workpiece W becomes larger as the resistivity of the wire electrode 18 is higher. In view of this, the reference threshold value $V_{TH0}$ is compensated to a larger threshold value $V_{TH}$ as the resistivity of the wire electrode 18 is higher.

(3) The voltage V during the short-circuiting between the wire electrode 18 and the workpiece W becomes larger as the resistivity of the workpiece W is higher. In view of this, the reference threshold value $V_{TH0}$ is compensated to a larger threshold value $V_{TH}$ as the resistivity of the workpiece W is higher.

(4) The voltage V during the short-circuiting between the wire electrode 18 and the workpiece W becomes larger as the thickness of the workpiece W is smaller. In view of this, the reference threshold value $V_{TH0}$ is compensated to a larger threshold value $V_{TH}$ as the thickness of the workpiece W is smaller.

(5) The voltage V during the short-circuiting between the wire electrode 18 and the workpiece W becomes larger as the resistivity of the working fluid LQ is higher. In view of this, the reference threshold value $V_{TH0}$ is compensated to a larger threshold value $V_{TH}$ as the resistivity of the working fluid LQ is higher.

The threshold value determination unit 36 outputs the calculated threshold value $V_{TH}$ to the control device 22. The storage unit 26 may store the calculated threshold value $V_{TH}$.

The control device 22 determines whether the wire electrode 18 and the workpiece W have come into contact with each other by using the threshold value $V_{TH}$ input from the threshold value determination device 24. The control device 22 can more accurately perform the determination as to whether the wire electrode 18 and the workpiece W have come into contact with each other, by using the threshold value $V_{TH}$ calculated according to the plurality of factors.

Moreover, the threshold value $V_{TH}$ is obtained by compensating one reference threshold value $V_{TH0}$ based on the compensation amount $\sigma$. That is, according to the present embodiment, it is not necessary to store in advance, in the storage unit 26, a huge number of threshold values $V_{TH}$ corresponding to all combinations of the plurality of factors.

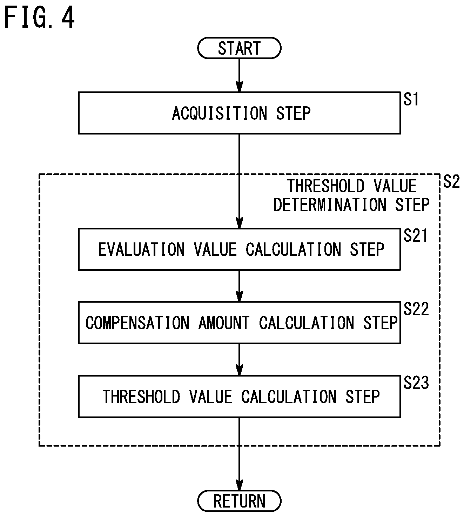

FIG. 4 is a flowchart illustrating a process flow of a threshold value determination method according to the embodiment.

The threshold value determination device 24 can execute the threshold value determination method of FIG. 4. The threshold value determination method includes an acquisition step S1 and a threshold value determination step S2.

The acquisition step S1 is a step in which the acquisition unit 34 acquires the plurality of set values 44 related to the plurality of factors.

The threshold value determination step S2 is a step in which the threshold value determination unit 36 determines the threshold value $V_{TH}$ based on the reference values 32 corresponding to the plurality of factors and on the acquired plurality of set values 44. The threshold value determination step S2 includes an evaluation value calculation step S21, a compensation amount calculation step S22, and a threshold value calculation step S23.

The evaluation value calculation step S21 is a step in which the evaluation value calculation unit 38 calculates the plurality of evaluation values 46 based on the plurality of set values 44.

The compensation amount calculation step S22 is a step in which the compensation amount calculation unit 40 calculates the compensation amount $\sigma$ based on the plurality of evaluation values 46 and the plurality of reference values 32. The compensation amount calculation unit 40 calculates the compensation amount $\sigma$ based on, for example, the above-described Equation (1).

The threshold value calculation step S23 is a step in which the threshold value calculation unit 42 calculates the threshold value $V_{TH}$ by multiplying the reference threshold value $V_{TH0}$ and the compensation amount $\sigma$. The threshold value calculation unit 42 calculates the threshold value $V_{TH}$ based on the above-described Equation (2).

The control device 22 can more accurately determine the contact between the wire electrode 18 and the workpiece W by using the threshold value $V_{TH}$ calculated in the threshold value calculation step S23.

[Modifications]

Modifications of the above-described embodiment will be described below. However, explanations that overlap with those of the embodiment will be omitted insofar as possible in the following description. The same reference numerals as those in the above embodiment are given to the components already described in the above embodiment, unless otherwise specified.

(Modification 1)

External factors such as ambient temperature, atmospheric pressure, and electromagnetic wave around the wire electrical discharge machine 10 (work pan 12) can also be factors that cause the voltage V1 to vary.

In view of the above, the acquisition unit 34 may further acquire the set values 44 of the temperature, the atmospheric pressure, the electromagnetic wave (the frequency of the electromagnetic wave), etc. around the wire electrical discharge machine 10. The set values 44 of the external factors are acquired based on output signals of predetermined sensors such as a temperature sensor, an atmospheric pressure sensor, etc.

The storage unit 26 may store the reference value 32 ($\delta_0$) of the external factors. The reference value $\delta_0$ is determined in advance based on a predetermined temperature, a predetermined atmospheric pressure, a predetermined frequency of the electromagnetic wave, etc.

The evaluation value calculation unit 38 may calculate the evaluation value 46 ($\delta$) of the external factors based on the set values 44 of the temperature, the atmospheric pressure, the electromagnetic wave, etc. acquired by the acquisition unit 34. Here, when the acquired temperature, atmospheric pressure, electromagnetic wave, etc. are the same as the predetermined temperature, the predetermined atmospheric pressure, the predetermined frequency of the electromagnetic wave, etc. used for determining the reference value $\delta_0$, the evaluation value $\delta$ is the same value as the reference value $\delta_0$.

The compensation amount calculation unit 40 may calculate the compensation amount $\sigma$ using the following Equation (3). In Equation (3), $\delta_0$ represents the reference value $\delta_0$ of the external factors. $\delta$ represents the evaluation value $\delta$ of the external factors. D is a weighting coefficient. Other characters are as in Equation (1).

$$\sigma = \left(1 + \frac{\alpha_0 - \alpha}{\alpha_0} A\right) \times \left(1 + \frac{\beta_0 - \beta}{\beta_0} B\right) \times \left(1 + \frac{\gamma_0 - \gamma}{\gamma_0} C\right) \times \left(1 + \frac{\delta_0 - \delta}{\delta_0} D\right) \cdots (3)$$

According to the present modification, the threshold value $V_{TH}$ is calculated also in consideration of the external factors.

(Modification 2)

The reference value $\beta_0$ of the workpiece W and the evaluation value $\beta$ of the workpiece W may be determined using a value indicating the state of the machined surface (surface roughness). That is, the reference value $\beta_0$ and the evaluation value $\beta$ may be determined using at least one of the thickness, the resistivity, the state of the machined surface, etc. of the workpiece W.

(Modification 3)

The reference value $\gamma_0$ of the working fluid LQ and the evaluation value $\gamma$ of the working fluid LQ may be determined using the liquid temperature, flow velocity, etc. of the working fluid LQ. That is, the reference value $\gamma_0$ and the evaluation value $\gamma$ may be determined using at least one of the resistivity, the liquid temperature, the flow velocity, etc. of the working fluid LQ. The flow velocity of the working fluid LQ is the velocity at which the working fluid LQ is jetted from the jet nozzle disposed in the work pan 12.

(Combination of Plurality of Modifications)

The plurality of modifications described above may be appropriately combined within a range in which no technical inconsistencies occur.

[Inventions Capable of Being Obtained from Embodiment]

The invention that can be grasped from the above-described embodiment and modifications will be described below.

<First Aspect of Invention>

The wire electrical discharge machine (10) determines that the wire electrode (18) and the workpiece (W) have come into contact with each other when the voltage (V) between the wire electrode and the workpiece has become lower than the threshold value ($V_{TH}$). The wire electrical discharge machine includes: the acquisition unit (34) configured to acquire the set value (44) related to the factor that causes the voltage between the wire electrode and the workpiece to vary; and the threshold value determination unit (36) configured to calculate the threshold value ($V_{TH}$) based on the reference value (32) corresponding to the factor and the acquired set value.

With this configuration, the threshold value is calculated in accordance with the factor that causes the voltage between the wire electrode and the workpiece to vary, and therefore it is possible to more accurately determine the contact between the wire electrode and the workpiece based on the comparison between the threshold value and the voltage.

The threshold value determination unit (36) may include: the evaluation value calculation unit (38) configured to calculate the evaluation value (46) corresponding to the factor, based on the set value; the compensation amount calculation unit (40) configured to calculate the compensation amount ($\sigma$) based on the difference between the reference value and the evaluation value; and the threshold value calculation unit (42) configured to calculate the threshold value by compensating the reference threshold value ($V_{TH0}$) based on the compensation amount, the reference threshold value being determined according to the reference value, and the compensation amount calculation unit may set the compensation amount to be larger as the evaluation value is smaller than the reference value, and may set the compensation amount to be smaller as the evaluation value is larger than the reference value. With this configuration, the threshold value is calculated based on the difference between the reference value and the evaluation value, and therefore, it is not necessary to store in advance a huge number of threshold values corresponding to all variations of, for example, the wire diameter in the data table.

The factor may include the plurality of factors, the plurality of factors may include the working fluid (LQ) in which the workpiece is immersed, the wire electrode, and the workpiece, the compensation amount calculation unit may calculate the compensation amount based on one or more factors of the plurality of factors, and the threshold value calculation unit may calculate the threshold value by multiplying the compensation amount and the reference threshold value determined according to the reference value of the one or more factors. With this configuration, it is possible to obtain the threshold values corresponding to any combinations of the plurality of factors described above.

The one or more factors may include the wire electrode. The evaluation value calculation unit may set the evaluation value of the wire electrode to be smaller as the wire diameter of the wire electrode is smaller or as the resistivity of the wire electrode is higher, and may set the evaluation value of the wire electrode to be larger as the wire diameter is larger or as the resistivity of the wire electrode is lower. This makes it possible to more accurately perform determination, based on the comparison between the threshold value and the voltage, as to whether the wire electrode and the workpiece have come into contact with each other.

The one or more factors may include the workpiece, and the evaluation value calculation unit may set the evaluation value of the workpiece to be smaller as the resistivity of the workpiece is higher or as the workpiece is thinner, and may set the evaluation value of the workpiece to be larger as the resistivity of the workpiece is lower or as the workpiece is thicker. This makes it possible to more accurately perform determination, based on the comparison between the threshold value and the voltage, as to whether the wire electrode and the workpiece have come into contact with each other.

The one or more factors may include the working fluid, and the evaluation value calculation unit may set the evaluation value of the working fluid to be smaller as the resistivity of the working fluid is higher, and may set the evaluation value of the working fluid to be larger as the resistivity of the working fluid is lower. This makes it possible to more accurately perform determination, based on the comparison between the threshold value and the voltage, as to whether the wire electrode and the workpiece have come into contact with each other.

The plurality of factors may further include the external factor, the external factor may include at least one of the temperature, the atmospheric pressure, or the electromagnetic wave around the wire electrical discharge machine, and the compensation amount calculation unit may calculate the compensation amount based on at least one of the working fluid, the wire electrode, or the workpiece, and the external factor, among the plurality of factors. With this configuration, the threshold value is determined in consideration of the external factors as well, and therefore it is possible to more accurately determine whether or not the wire electrode and the workpiece have come into contact with each other.

<Second Aspect of Invention>

A second aspect of the present invention is characterized by the threshold value determination device (24) for determining the threshold value ($V_{TH}$) to be compared with the voltage (V) between the wire electrode (18) of the wire electrical discharge machine (10) and the workpiece (W) in order to determine whether or not the wire electrode and the workpiece have come into contact with each other, the threshold value determination device including: the acquisition unit (34) configured to acquire the set value (44) related to the factor that causes the voltage between the wire electrode and the workpiece to vary; and the threshold value determination unit (36) configured to calculate the threshold value ($V_{TH}$) based on the reference value (32) of the factor and the acquired set value.

With this configuration, the threshold value is calculated in accordance with the factor that causes the voltage (V) between the wire electrode and the workpiece to vary, and therefore it is possible to more accurately determine the contact between the wire electrode and the workpiece based on the comparison between the threshold value and the voltage.

<Third Aspect of Invention>

A third aspect is characterized by the threshold value determination method for determining the threshold value ($V_{TH}$) to be compared with the voltage (V) between the wire electrode (18) of the wire electrical discharge machine (10) and the workpiece (W) in order to determine whether or not the wire electrode and the workpiece have come into contact with each other, the threshold value determination method including: the acquisition step (S1) of acquiring the set value (44) related to the factor that causes the voltage between the wire electrode and the workpiece to vary; and the threshold value determination step (S2) of calculating the threshold value ($V_{TH}$) based on the reference value (32) of the factor and the acquired set value.

With this configuration, the threshold value is calculated in accordance with the factor that causes the voltage (V) between the wire electrode and the workpiece to vary, and therefore it is possible to more accurately determine the contact between the wire electrode and the workpiece based on the comparison between the threshold value and the voltage.

Reference Signs List

10: wire electrical discharge machine
18: wire electrode
24: threshold value determination device
32: reference value
34: acquisition unit
36: threshold value determination unit
38: evaluation value calculation unit
40: compensation amount calculation unit
42: threshold value calculation unit
44: set value
46: evaluation value
LQ: working fluid
V: voltage
$V_{TH}$: threshold value
$V_{TH0}$: reference threshold value
W: workpiece
$\sigma$: compensation amount

**Claims**

1. A wire electrical discharge machine (10) configured to determine that a wire electrode (18) and a workpiece (W) have come into contact with each other when a voltage (V) between the wire electrode and the workpiece has become lower than a threshold value ($V_{TH}$), the wire electrical discharge machine (10) comprising:

    an acquisition unit (34) configured to acquire a set value (44) related to a factor that causes the voltage between the wire electrode and the workpiece to vary; and
    a threshold value determination unit (36) configured to calculate a threshold value ($V_{TH}$) based on a reference value (32) corresponding to the factor and the acquired set value.

2. The wire electrical discharge machine according to claim 1, wherein
    the threshold value determination unit (36) includes:

    an evaluation value calculation unit (38) configured to calculate an evaluation value (46) corresponding to the factor, based on the set value;
    a compensation amount calculation unit (40) configured to calculate a compensation amount ($\sigma$) based on a difference between the reference value and the evaluation value; and
    a threshold value calculation unit (42) configured to calculate the threshold value by compensating a reference threshold value ($V_{TH0}$) based on the compensation amount, the reference threshold value being determined according to the reference value, and
    wherein
    the compensation amount calculation unit sets the compensation amount to be larger as the evaluation value is smaller than the reference value, and sets the compensation amount to be smaller as the evaluation value is larger than the reference value.

3. The wire electrical discharge machine according to claim 2, wherein

the factor includes a plurality of factors,

the plurality of factors include a working fluid (LQ) in which the workpiece is immersed, the wire electrode, and the workpiece,

the compensation amount calculation unit calculates the compensation amount based on one or more factors of the plurality of factors, and

the threshold value calculation unit calculates the threshold value by multiplying the compensation amount and the reference threshold value determined according to the reference values of the one or more factors.

4. The wire electrical discharge machine according to claim 3, wherein

the one or more factors include the wire electrode, and

the evaluation value calculation unit sets the evaluation value of the wire electrode to be smaller as a wire diameter of the wire electrode is smaller or as a resistivity of the wire electrode is higher, and sets the evaluation value of the wire electrode to be larger as the wire diameter is larger or as the resistivity of the wire electrode is lower.

5. The wire electrical discharge machine according to claim 3 or 4, wherein

the one or more factors include the workpiece, and

the evaluation value calculation unit sets the evaluation value of the workpiece to be smaller as a resistivity of the workpiece is higher or as the workpiece is thinner, and sets the evaluation value of the workpiece to be larger as the resistivity of the workpiece is lower or as the workpiece is thicker.

6. The wire electrical discharge machine according to any one of claims 3 to 5, wherein

the one or more factors include the working fluid, and

the evaluation value calculation unit sets the evaluation value of the working fluid to be smaller as a resistivity of the working fluid is higher, and sets the evaluation value of the working fluid to be larger as the resistivity of the working fluid is lower.

7. The wire electrical discharge machine according to any one of claims 3 to 6, wherein

the plurality of factors further include an external factor,

the external factor includes at least one of a temperature, an atmospheric pressure, or an electromagnetic wave around the wire electrical discharge machine, and

the compensation amount calculation unit calculates the compensation amount based on at least one of the working fluid, the wire electrode, or the workpiece, and the external factor, among the plurality of factors.

8. A threshold value determination device (24) for determining a threshold value ($V_{TH}$) to be compared with a voltage (V) between a wire electrode (18) of a wire electrical discharge machine (10) and a workpiece (W) in order to determine whether or not the wire electrode and the workpiece have come into contact with each other, the threshold value determination device (24) comprising:

an acquisition unit (34) configured to acquire a set value (44) related to a factor that causes the voltage between the wire electrode and the workpiece to vary; and

a threshold value determination unit (36) configured to calculate a threshold value ($V_{TH}$) based on a reference value (32) of the factor and the acquired set value.

9. A threshold value determination method for determining a threshold value ($V_{TH}$) to be compared with a voltage (V) between a wire electrode (18) of a wire electrical discharge machine (10) and a workpiece (W) in order to determine whether or not the wire electrode and the workpiece have come into contact with each other, the threshold value determination method comprising:

an acquisition step (S1) of acquiring a set value (44) related to a factor that causes the voltage between the wire electrode and the workpiece to vary; and

a threshold value determination step (S2) of calculating a threshold value ($V_{TH}$) based on a reference value (32) of the factor and the acquired set value.

FIG. 1

FIG. 2A

FIG. 2B

# FIG. 3

24

```
┌─────────────────────────────────────────────────────────────────────┐
│              THRESHOLD VALUE DETERMINATION DEVICE                      │
│                                                                       │
│  ┌──────────────────────────────┐   ┌──────────────────────────────┐ │
│26│       STORAGE UNIT           │   │    COMPUTATION UNIT          │28│
│  │                              │   │   (PROCESSING CIRCUIT)       │ │
│30│  ┌────────────────────────┐  │   │  ┌────────────────────────┐  │34│
│  │  │   THRESHOLD VALUE      │  │   │  │   ACQUISITION UNIT     │  │ │
│  │  │ DETERMINATION PROGRAM  │  │   │  └────────────────────────┘  │ │
│  │  └────────────────────────┘  │   │                              │ │
│32│  ┌────────────────────────┐  │   │  ┌────────────────────────┐  │36│
│  │  │   REFERENCE VALUE      │  │   │  │   THRESHOLD VALUE      │  │ │
│  │  └────────────────────────┘  │   │  │  DETERMINATION UNIT    │  │ │
│  │  ┌────────────────────────┐  │   │  │ ┌────────────────────┐ │  │38│
│VTH0 │      REFERENCE         │  │   │  │ │ EVALUATION VALUE   │ │  │ │
│  │  │   THRESHOLD VALUE      │  │   │  │ │ CALCULATION UNIT   │ │  │ │
│  │  └────────────────────────┘  │   │  │ └────────────────────┘ │  │ │
│44│  ┌────────────────────────┐  │   │  │ ┌────────────────────┐ │  │40│
│  │  │      SET VALUE         │  │   │  │ │COMPENSATION AMOUNT │ │  │ │
│  │  └────────────────────────┘  │   │  │ │ CALCULATION UNIT   │ │  │ │
│46│  ┌────────────────────────┐  │   │  │ └────────────────────┘ │  │42│
│  │  │   EVALUATION VALUE     │  │   │  │ ┌────────────────────┐ │  │ │
│  │  └────────────────────────┘  │   │  │ │  THRESHOLD VALUE   │ │  │ │
│ σ│  ┌────────────────────────┐  │   │  │ │ CALCULATION UNIT   │ │  │ │
│  │  │  COMPENSATION AMOUNT   │  │   │  │ └────────────────────┘ │  │ │
│  │  └────────────────────────┘  │   │  └────────────────────────┘  │ │
│VTH│  ┌────────────────────────┐  │   │                              │ │
│  │  │    THRESHOLD VALUE     │  │   │                              │ │
│  │  └────────────────────────┘  │   │                              │ │
│  └──────────────────────────────┘   └──────────────────────────────┘ │
└─────────────────────────────────────────────────────────────────────┘
```

# FIG. 4

```
            ( START )
                │
                ▼
┌───────────────────────────────┐
│      ACQUISITION STEP         │  S1
└───────────────────────────────┘
                │
   ┌────────────┼──────────────────────────┐
   ┊            ▼        THRESHOLD VALUE     ┊ S2
   ┊                     DETERMINATION STEP  ┊
   ┊ ┌──────────────────────────────────┐   ┊
   ┊ │  EVALUATION VALUE CALCULATION STEP│ S21
   ┊ └──────────────────────────────────┘   ┊
   ┊            │                            ┊
   ┊            ▼                            ┊
   ┊ ┌──────────────────────────────────┐   ┊
   ┊ │ COMPENSATION AMOUNT CALCULATION STEP│ S22
   ┊ └──────────────────────────────────┘   ┊
   ┊            │                            ┊
   ┊            ▼                            ┊
   ┊ ┌──────────────────────────────────┐   ┊
   ┊ │  THRESHOLD VALUE CALCULATION STEP │ S23
   ┊ └──────────────────────────────────┘   ┊
   └────────────┼──────────────────────────┘
                │
                ▼
           ( RETURN )
```

## INTERNATIONAL SEARCH REPORT

| | |
|---|---|
| International application No. | |
| | **PCT/JP2022/003269** |

**A. CLASSIFICATION OF SUBJECT MATTER**

***B23H 7/02***(2006.01)i
FI: B23H7/02 R

According to International Patent Classification (IPC) or to both national classification and IPC

**B. FIELDS SEARCHED**

Minimum documentation searched (classification system followed by classification symbols)

B23H1/00-11/00; B23Q 17/09

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 49-80694 A (INOUE JAPAX RES., INC.) 03 August 1974 (1974-08-03)<br>entire text, all drawings | 1-9 |
| A | JP 59-93227 A (FANUC KK) 29 May 1984 (1984-05-29)<br>entire text, all drawings | 1-9 |
| A | JP 4-122523 A (MITSUBISHI ELECTRIC CORP.) 23 April 1992 (1992-04-23)<br>entire text, all drawings | 1-9 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/003269**

| Patent document cited in search report | | | Publication date (day/month/year) | Patent family member(s) | Publication date (day/month/year) |
|---|---|---|---|---|---|
| JP | 49-80694 | A | 03 August 1974 | (Family: none) | |
| JP | 59-93227 | A | 29 May 1984 | US 4614854 A<br>entire text, all drawings<br>WO 1984/001915 A1<br>EP 124625 A1 | |
| JP | 4-122523 | A | 23 April 1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013226612 A